# EUROPÄISCHE PATENTSCHRIFT

(11) **EP 3 684 482 B1**
(45) Veröffentlichungstag und Bekanntmachung des Hinweises auf die Patenterteilung: **21.07.2021**
(21) Anmeldenummer: 18779260.1
(22) Anmeldetag: 17.09.2018
(51) Int. Cl.: A63C 17/00

(54) **ENERGIEFÜHRUNGSKETTE MIT LAUFROLLEN**
ENERGY CHAIN COMPRISING ROLLERS
CHAÎNE PORTE-CÂBLES À ROULEAUX

(30) Priorität: 18.09.2017 DE 202017105644 U
(43) Veröffentlichungstag der Anmeldung: 29.07.2020
(73) Patentinhaber: Igus GmbH, 51147 Köln (DE)
(72) Erfinder: STRACK, Stefan, 53639 Königswinter (DE); HERMEY, Andreas, 53773 Hennef (DE)
(74) Vertreter: Lippert Stachow Patentanwälte Rechtsanwälte
(86) Internationale Anmeldenummer: PCT/EP2018/075036
(87) Internationale Veröffentlichungsnummer: WO 2019/053248

(56) Entgegenhaltungen:
- EP-A1- 1 980 301
- EP-A1- 3 015 143
- WO-A1-2017/086134
- DE-U1-202007 012 593
- DE-U1-202012 003 908

## Beschreibung

Die Erfindung betrifft allgemein Energieführungskette mit Laufrollen. Energieführungsketten dienen zur aktiven bzw. dynamischen Führung von Leitungen, wie Schläuchen, Kabeln oder dergleichen, und haben typisch eine Anzahl gelenkig miteinander verbundener Kettenglieder aus Einzelteilen, meist zueinander parallele Seitenlaschen und diese verbindende Querstege. Eine Energieführungskette ist so verfahrbar ist, dass sie ein Obertrum, ein Untertrum und einen diese verbindenden Umlenkbereich mit vorgegebenem Krümmungsradius bildet.

WO 2017/086134 A1 offenbart eine Energieführungskette mit Führungsrollen an jedem zweiten Kettenglied, welche quer zur Längsrichtung der Kette vorstehen und in einer Führungsnut einer Führungsschiene aufgenommen sind. Die Rollen dienen der Führung der Kette.

Die Erfindung betrifft insbesondere eine Energieführungskette, bei welcher an zumindest an einigen Kettengliedern des Obertrums oder des Untertrums, oder an beiden, Laufrollen vorgesehen und derart angeordnet sind, dass sie zumindest geringfügig über Schmalseiten der Seitenlaschen in Richtung auf das jeweils gegenüberliegende Trum hervorstehen. So kann die Reibung beim Verfahren der Energieführungskette im Vergleich zu abgleitenden Ketten durch ein Abrollen verringert werden, wenn das Obertrum auf dem Untertrum selbst oder auf einer separaten Auflage einer Stützkonstruktion, wie z.B. einer Führungsrinne, abgestützt hin- und herfährt.

Derartige Energieführungsketten mit Rollen (sog. Rollenketten) sind bereits bekannt. Eine sehr bewährte Bauform gemäß den Patenten EP 1 076 784 B1 und EP 1 359 343 B1 der Anmelderin ist schematisch in FIG.1 gezeigt. Eine weitere Rollenkette, bei der die Laufrollen geringfügig über Schmalseiten der Seitenlaschen hervorstehen, ist in DE 20 2012 003 908 U1 offenbart.

Ein bekanntes Problem ist dabei die Geräusch- und Vibrationsentwicklung, ganz allgemein wenn die Laufrollen auf konstruktionsbedingte Kanten oder Hindernisse treffen. Dies ist z.B. insbesondere beim Aufeinandertreffen von Laufrollen am Obertrum auf entsprechende Laufrollen am Untertrum der Fall. Das Überwinden solcher Hindernisse erhöht zudem die erforderliche Zugkraft bzw. den Verschleiß, insbesondere der Laufrollen selbst.Zur Vermeidung von Stößen zwischen gegenüberliegenden Laufrollen und einhergehender Geräusch- und Vibrationsentwicklung wurde z.B. in EP 1 076 784 B1 vorgeschlagen, dass die Laufrollen ein Führungsprofil aufweisen, das durch umlaufende, im Abstand voneinander in der Lauffläche der Laufrollen angeordnete Führungsrillen gebildet wird.

Dies ermöglicht es, dass die Gleitrollen zweier übereinander laufender, jeweils mit Rollen bestückter Kettenglieder aufeinandertreffen, durch einen leichten seitlichen Versatz im Wesentlichen berührungslos aneinander vorbeilaufen bzw. "ineinander kämmen". Mit dem seitlichen Versatz steigt jedoch die Komplexität im Aufbau der Energieführungskette insgesamt.

Eine demgegenüber konstruktiv deutlich aufwendigere Alternativlösung mit seitlich ein- und ausfahrbaren Laufrollen gemäß DE 10 2004 038 817 A1 bzw. US 6,997,412 B2 hat sich offenbar am Markt nicht durchsetzen können.

Ebenfalls bekannt sind technisch aufwendige und daher wartungsintensive bzw. fehleranfällige Lösungen mit vertikal ein- und ausfahrbaren Laufrollen, d.h. Laufrollen die gegenüber der Schmalseite eingezogen werden können.

DE 10 2010 035 352 A1 schlägt zur Vermeidung aufeinandertreffender Laufrollen vor, dass die Laufrolle am oder in einer Seitenlasche verschiebbar gelagert ist und in vertikaler Richtung durch Schwerkraft verstellt wird. Wenn das Kettenglied mit der Laufrolle sich im Untertrum befindet, steht die Rolle nicht über die Schmalseite der Lasche hervor. Nur wenn das Kettenglied sich im Obertrum befindet, ragt die Rolle über die Schmalseite der Lasche in Richtung des Untertrums hervor.

EP 2 549 144 A1 schlägt eine Lösung mit einem federbelasteten Stellmechanismus vor. Die Stützräder bzw. Laufrollen können durch eine Stellfeder in eine Position innerhalb des Kettengliedkörpers eingezogen werden, wenn die Laufrollen sich im Obertrum befinden. Wenn die Laufrollen sich im Untertrum befinden, werden diese in eine über die Schmalseite vorstehende Position gegen die Federbelastung bewegt, um das gegenüberliegende Obertrum zu tragen. Die Stellvorrichtung verschiebt dabei die Rolle durch ein Stellglied, das an der gegenüberliegenden Schmalseite vorragt und im Untertrum durch die Gewichtskraft eingedrückt wird, um die Laufrollen an der anderen Seite vorstehen zu lassen.

Gemäß der Erfindung soll eine Weiterentwicklung der aus dem Patent EP 2 839 183 B1 bekannten Rollenkette vorgeschlagen werden. Hierbei handelt es sich um eine Energieführungskette zur abwechselnden Innenlaschen und Außenlaschen in den Laschensträngen, wie z.B. aus WO 95/04231 A1 bekannt, wobei zumindest das Obertrum oder das Untertrum eine Anzahl Laufrollen aufweist, um beim Verfahren der Energieführungskette ein Abrollen zu ermöglichen.

Eine Aufgabe der vorliegenden Erfindung ist es, eine Energieführungskette gemäß EP 2 839 183 B1 oder JP H06 182463 A dahingehend weiterzuentwickeln, dass diese auch bei höheren Zugkräfte bzw. noch größeren Kettenlängen eine gesteigerte Lebensdauer aufweist. Diese Aufgabe wird durch eine Energieführungskette bzw. eine Rollenbaugruppe für eine Energieführungskette gemäß einem der Ansprüche 1 bis 7 gelöst.

### ERSTER ASPEKT (nicht beansprucht)

Gemäß dem ersten, nicht beanspruchten Aspekt wird vorgeschlagen, dass zumindest eine überwiegender Anteil Laufrollen, vorzugsweise alle Laufrollen, jeweils einen Radkörper aus Kunststoff aufweisen, wobei der Radkörper eine Nabe, einen Radkranz, sowie einen Radialbereich umfassen, welcher die Nabe und den Radkranz tragend miteinander verbindet und dessen Materialstärke, insbesondere im Vergleich zum Radkranz, so reduziert ist, dass radiale Stöße beim Abrollen durch elastische Verformbarkeit des Radialbereichs gedämpft werden können. Durch diese Konstruktive Maßnahme können die Laufrollen selbst bei Auftreten einer radial wirkenden Kraft, insbesondere beim Auftreffen auf eine Kante oder eine gegenüberliegende Rolle, elastisch verformt werden und damit selbst stoßdämpfende Wirkung entfalten.

Unter Laufrolle ist hier eine Rolle, insbesondere nicht angetriebene Rolle, zu verstehen, die zur Abstützung des Eigengewichts eines Längsabschnitts der Energieführungskette und Reibungsverminderung im Vergleich zu einem rein abgleitenden Verlauf eingesetzt wird, ungeachtet einer Anordnung am Obertrum und/oder am Untertrum. Der sog. Radialbereich umfasst dabei die konstruktiven Bestandteile des Radköpers, welche radial zwischen Nabe und Radkranz angeordnet sind und zur Übertragung der Kräfte zwischen diesen dienen. Die Nabe ist im Zentrum des Rollenkörpers angeordnet und dient als Verbindung zur Lager- bzw. Achskonstruktion. Die Nabe kann dabei mit einem Lager, vorzugsweise Wälzlager, fest oder lösbar verbunden sein. Im Übrigen sei angemerkt, dass der Begriff zylindrisch, soweit nicht anders angegeben, vorliegend im Sinne von kreiszylindrisch verwendet wird.

Durch Reduzierung der Materialstärke gegenüber konventionellen Bauformen lässt sich der Widerstand der Rolle gegen elastische Verformung bei radial wirkender Druckkraft entsprechend ebenfalls verringern. In Kombination mit geeigneter Auswahl des Kunststoffs lässt sich so trotz hoher Dauerbeständigkeit auch eine hinreichende Eigendämpfung der Laufrolle erzielen, welche Geräusch- und Vibrationsentwicklung bzw. den Verschleiß bei Rollenketten spürbar verringert.

Der Radkörper kann mit Nabe, Radkranz und Radialbereich einteilig aus Kunststoff, insbesondere materialeinheitlich im Spritzgussverfahren, hergestellt werden. Geeignete Kunststoffe hierfür sind z.B. thermoplastische Elastomere. Als besonders dauerbeständig zeigte sich hierbei in Versuchen Laufrollen mit Radkörpern aus thermoplastischem Polyurethan (TPU) als Grundmaterial. Durch Einsatz eines Anteils von Verstärkungsfasern, z.B. im Bereich von 5-20 Gew.%, im Elastomer, insbesondere in einer TPU-Matrix, kann ohne störenden Verlust der Elastizität die Dauerbeständigkeit weiter erhöht werden. So kann trotz ähnlicher Dauerbeständigkeit, wie bei stoßfeste Rollen aus Polyamid oder Nylon, eine günstige Dämpfungswirkung erzielt werden.

Eine Vereinfachung der Bauweise ergibt sich, wenn der Radkranz selbst eine äußere Rollfläche zum Abrollen auf einer Lauffläche aufweist und/oder die Nabe eine Lageraufnahme koaxial zur Drehachse aufweist, d.h. vorzugsweise keine separaten Bauteile wie z.B. eine Gummibereifung oder ein Nabeneinsatz verwendet werden.

Zur Erzielung der Materialschwächung bzw. reduzierten Materialstärke im Radialbereich bestehen grundsätzlich mehrere Möglichkeiten, einerseits z.B. Materialschwächung in axialer Richtung über den gesamten Umfang verteilt oder andererseits z.B. bei etwa gleichbleibender Wandstärke über den Umfang in Umfangsrichtung verteilte Aussparungen oder Durchbrechungen im Radialbereich.

Der Radialbereich kann axial beidseitig jeweils mindestens eine Verjüngung haben. Dies kann insbesondere durch zwei gegenüberliegende zu einer Medianebene des Radkörpers symmetrische Verjüngungen erzielt werden. Eine entsprechende Verjüngung trägt jedenfalls zur Reduzierung der Materialstärke zumindest bei. Unter der Medianebene wird vorliegend ein zentraler Längsschnitt senkrecht zur Drehachse durch den Radkörper verstanden. Bei einer derartigen Ausführungsform kann der Radialbereich insbesondere in Art einer Radscheibe ausgeführt sein, im Wesentlichen symmetrisch zur Medianebene oder beispielsweise um diese kurvenartig geschwungen verlaufend (asymmetrisch).

Bei Radialbereichen mit Verjüngung in axialer Richtung kann vorgesehen sein, dass der Radialbereich eine mittlere Axialstärke, d.h. Wandstärke gemessen in axialer Richtung, aufweist, die im Bereich von 33% bis 60% der entsprechenden Axialstärke des Radkranzes liegt. Dabei kann insbesondere eine minimale Axialstärke im Bereich von 25% bis 40% der Axialstärke des Radkranzes vorgesehen sein.

Zur Vermeidung ungünstiger Materialbelastung ist es vorteilhaft, wenn der Radialbereich des Radkörpers mit zunehmendem Radius, insbesondere von der Radnabe ausgehend, bis zu einem Minimum stetig abnehmende axiale Wandstärke aufweist und/oder an ein solches Minimum anschließend, insbesondere zum Radkranz hin, stetig zunehmende axiale Wandstärke aufweist. Insbesondere bei dieser Bauform kann der Radialbereich zwei entsprechend einem vorgegebenen Krümmungsradius konkav gekrümmte Stirnflächen aufweisen. Dabei ist der Krümmungsradius der axial abgewandten Stirnflächen vorzugsweise größer als die maximal vorgesehene Axialstärke (d.h. die Wandstärke in Axialrichtung) der Laufrolle.

Insbesondere bei gekrümmten Flächen des Radialbereichs kann ein stetig gekrümmter Übergang von jeder Stirnfläche des Radialbereichs zur Innenfläche des Radkranzes und/oder zur Außenfläche der Nabe vorgesehen sein. Günstige Belastungsverhältnisse ergeben sich wenn ein derartiger Übergang jeweils einen Übergangsradius aufweist, der deutlich kleiner ist als der Krümmungsradius, entsprechend welchem die Stirnflächen gekrümmt sind.

Grundsätzlich sollte der Radialbereich zur Entfaltung einer geeigneten Dämpfungswirkung einen ausreichenden Anteil der Radialabmessung des Radkörpers darstellen. In Langzeitversuchen bewährt hat sich eine Gestaltung, bei welcher der Radialbereich sich in Radialrichtung über einen Anteil von mindestens 25% des Radkörpers erstreckt. Hierdurch kann in Kombination geeignet reduzierter Materialstärke eine stets ausreichende Verformung des Radialbereichs zum Auffangen von typischen im Betrieb auftretenden stoßartigen Radialkräften am Radkranz, insbesondere bei Aufeinandertreffen von zwei Laufrollen, gewährleistet werden.

Unter Anwendung der vorstehenden Merkmale kann der Radialbereich, etwa in Art einer vollen Radscheibe, als rotationssymmetrische, in Umfangrichtung vollständig durchgehende bzw. unterbrechungsfreie Ringscheibe ausgeführt sein. Mit anderen Worten, die Reduzierung der Materialstärke kann ausschließlich durch veränderte Wandstärke in Radialrichtung erzielt werden, wobei für jeden Radius in Umfangrichtung rotationssymmetrisch eine vorgegebene gleichbleibende Wandstärke vorliegen kann. Derartige Bauformen haben sich in Langzeitversuchen als besonders dauerbeständig erwiesen und werden als besonders bevorzugte Ausführungsform angesehen.

Alternativ oder ergänzend hierzu kann, insbesondere zur Erhöhung der Dämpfungswirkung, vorgesehen sein, dass der Radialbereich, etwa in Art einer Radfelge, in Umfangrichtung rotationssymmetrisch angeordnete axiale Aussparungen, insbesondere axiale Durchbrüche, aufweist. Derartige Aussparungen, insbesondere Durchbrüche, können speichenartige Radialstege im Radialbereich bilden, die primär zur Kraftübertragung zwischen Radkranz und Nabe dienen. Geschwächte oder freibleibende Bereiche zwischen den speichenartigen Radialstegen reduzieren einerseits das Rollengewicht und erhöhen andererseits die Verformbarkeit des Radialbereichs, einschließlich der Radialstege selbst. Bei derartigen Ausführungsformen ist die Wandstärke in Umfangsrichtung auf bestimmten Radien um die Drehachse somit veränderlich bzw. ganz unterbrochen.

Bevorzugt werden jedoch volle Radscheiben ohne Durchbrüche.

Beide Arten der Reduzierung der Materialstärke im Radialbereich lassen sich verhältnismäßig einfach und günstig im Spritzgussverfahren herstellen und erlauben in Kombination mit geeigneter Auswahl des Kunststoffs gute Dämpfungseigenschaften.

Bei Laufrollen mit axialen Durchbrüchen im Radialbereich können diese unterschiedliche Grundformen aufweisen, die so gewählt sein sollten, dass die verbleibenden speichenartigen Radialstege selbst ein günstiges Verformungsverhalten aufweisen. Dabei können die Durchbrüche beispielsweise:
- eine sichelförmige Grundform aufweisen, um gegenüber der Radialrichtung bogenartig gekrümmt verlaufende Radialstege zu bilden, insbesondere mit gleichsinniger Krümmung; oder
- abwechselnd in Umfangsrichtung eine konvexe oder konkave von zwei Grundformen aufweisen, um gegenüber der Radialrichtung bogenartig gekrümmt verlaufende Radialstege zu bilden, insbesondere mit abwechselnd entgegengesetzter Krümmung; oder
- eine trapezförmige Grundform, insbesondere entsprechend einem symmetrischen Trapez, aufweisen, mit nach innen zulaufenden Schenkeln bzw. abwechselnd nach innen und nach Außen zulaufenden Schenkeln, um radial bzw. schräg zur radialen Symmetrieachse des Trapez verlaufende Radialstege zu bilden.

Die Durchbrüche sind ungeachtet der gewählten Grundform innerhalb des Radialbereichs um die Drehachse der Laufrolle drehsymmetrisch verteilt bzw. gleichverteilt. Die Grundform der Durchbrüche bzw. Materialaussparungen kann insbesondere eine Haupterstreckung aufweisen, die sich in im Wesentlichen in radialer Richtung erstreckt oder zumindest eine überwiegende Komponente in Radialrichtung aufweist.

Die vorgeschlagene Gestaltung der Laufrollen mit verformbarem Radialbereich erlaubt es insbesondere, die Laufrollen in bewährter Weise mechanisch einfach an den Kettengliedern anzuordnen, d.h. mit einer bezüglich der Seitenlasche ortsfest gehaltenen Drehachse, um welche die Laufrollen drehbar an den jeweiligen Seitenlaschen gelagert sind. Aufwendige und fehleranfällige Verstell-Mechanismen zum seitlichen oder vertikalen Ein- und Ausfahren der Laufrollen, wie im Stand der Technik vorgeschlagen, sind somit nicht erforderlich.

Ungeachtet der gewählten Art der Materialschwächung im Radialbereich ist gemäß einem weiteren Aspekt bzw. in einer Weiterbildung vorgesehen, dass das Rollprofil mit welchem der Radkranz auf einer Gegenfläche abrollt im Querschnitt, d.h. im radialen Querschnitt umfassend die Drehachse, mindestens eine konkave Einbuchtung und/oder mindestens eine konvexe Ausbauchung bildet. So kann das Rollenprofil in diesem Querschnitt beispielsweise einen Verlauf einer doppelten S-Kurve aufweisen, oder eine ähnliche Profilform, welche bei Aufeinandertreffen von zwei Laufrollen zusätzlich einen geringfügigen seitlichen Versatz erzielt bzw. bei an sich bekannten konstruktivem Versatz den Anstieg bei aufeinandertreffen reduziert.

In Kombination mit den vorstehenden Merkmalen oder unabhängig hiervon kann das Rollprofil in Umfangsrichtung gewellt sein mit alternierenden Wellenbergen und Wellentälern. Vorzugsweise sind dabei die Wellentäler und Wellenberge schräg zur Meridianebene gerichtet. Weiter können dabei vorzugsweise zwei rotationssymmetrische Profilhälften asymmetrisch gegenüber der Meridianebene versetzt vorgesehen sein.

Mit geeigneter Formgebung des Rollprofils, insbesondere im Spritzgussverfahren, kann eine aneinander flächig angepasste, abgerundete Profilform erzielt werden, welche zusätzlich Geräusche beim Auftreffen, insbesondere beim Aufeinandertreffen der Rollen im Ober- und Untertrum dämpfen. Es hat sich gezeigt, dass ein wesentlicher Lärmfaktor das ggf. vielfach gleichzeitige Auftreffen der Rollen aufeinander darstellt, trotz gegebenenfalls vorgesehenen Anlaufschrägen bzw. "Rampen" vor und hinter den Rollenöffnungen. Bei herkömmlicher Rollenform mit zylindrischen Vollprofilen treffen die Laufrollen sozusagen Linienförmig aufeinander, was zu einem Sprungverhalten der abrollen Lauf Rolle führen kann - wie Hochgeschwindigkeitsaufnahmen in Versuchen gezeigt haben. Ohne weitere Verringerung des Abstands zwischen dem abrollenden Trum und der Gegenfläche, insbesondere den gegenüberliegenden Trum, kann durch eine geeignete Profilform ein "Hochspringen", und damit die Geräusch- und Vibrationsbildung weitergehend vermindert werden.

Bei jeder der vorgenannten Varianten ist die Laufrolle vorzugsweise mittels einer Aufnahme in der Nabe drehfest an einer Drehlagereinheit, insbesondere an einem Wälzlager wie z.B. einem Kugellager befestigt ist, um die Laufrolle drehbar an einer Seitenlasche zu lagern. Vorzugsweise weist die Nabe an einer überwiegend zylindrischen Innenfläche ein Befestigungsprofil aufweist, insbesondere mit Vorsprüngen und/oder Aussparungen, für eine kraft- und formschlüssige Verbindung mit bzw. eine drehfeste Befestigung an einer Außenfläche der Drehlagereinheit.

Die Laufrolle kann mittels einer Drehlagereinheit gelagert sein, welche an einem Schwenkgelenk angebracht ist, das durch zwei benachbarte Seitenlaschen gebildet ist und diese schwenkbar gelenkig miteinander verbindet. Hierbei weisen die Seitenlaschen vorzugsweise jeweils eine entsprechende Aussparung auf, in welcher die Laufrolle zwischen überlappenden Seitenwandbereichen der Seitenlaschen aufgenommen ist. Somit ist die Laufrolle mitsamt der Drehlagereinheit zwischen Seitenwandbereichen der Seitenlaschen geschützt aufgenommen und steht lediglich an der Schmalseite geringfügig nach außen hervor.

Die Laufrolle eignet sich nicht nur aber insbesondere für Energieführungsketten, bei welchen das Obertrum auf dem Untertrum bestimmungsgemäß abrollen kann. Dabei können die Laufflächen, auf welchen die Laufrollen abrollen, durch die dem gegenüberliegenden Trum zugewandten Schmalseiten der Seitenlaschen gebildet werden. Auch bei Abrollen auf einer andersartigen Stützkonstruktion, beispielsweise einer stützenden Lauffläche einer Führungsrinne bietet der erste Aspekt der Erfindung jedoch die eingangs genannten Vorteile.

Eine Laufrolle gemäß dem vorstehenden nicht beanspruchten ersten Aspekt lässt sich grundsätzlich in jeder Energieführungskette mit Laufrollen einsetzen.

### ZWEITER ASPEKT (beanspruchte Erfindung)

Gemäß der Erfindung ist bei einer Energieführungskette gemäß dem Oberbegriff aus Anspruch 1 mit abwechselnden Innen- und Außenlaschen in den gegenüberliegenden Laschenstrengen erfindungsgemäß vorgesehen, dass jede Laufrolle jeweils an einem Paar aus zwei gegeneinander schwenkbaren Außenlaschen, mit einer ersten und einer benachbarten zweiten Außenlasche, angeordnet ist, und dass die Gelenkverbindung des Paars aus Außenlaschen einen Gelenkzapfen, der einteilig mit der ersten Außenlasche geformt ist, sowie eine entsprechende Gelenkaufnahme umfasst, die von der zweiten Außenlasche gebildet ist, wobei der Gelenkzapfen in die Gelenkaufnahme eingreift und darin schwenkbar ist.

Im Vergleich zu der Gelenkverbindung gemäß EP 2 839 183 B1, bei welcher eine separat angeschraubt Abdeckung (vgl. dort Fig.1c) den Gelenkzapfen bildet, kann gemäß der Erfindung eine gesteigerte Lebensdauer bei hohen Zugkräften bzw. eine größere maximale Länge der Energieführungskette realisieren.

Die Gelenkaufnahme kann dabei durch einen hülsenartigen zur Schwenkachse koaxialen Ringvorsprung gebildet werden, welcher einteilig mit der zugfesten Laschen hergestellt und dementsprechend robust ist. Die Laufrolle ist dabei mit ihrer Drehachse koaxial zur Schwenkachse drehbar gelagert und an diesem Ringvorsprung angebracht. Hierzu kann die Laufrolle insbesondere unter Verwendung einer Drehlagereinheit an dem Ringvorsprung drehbar befestigt sein, indem die Laufrolle drehfest an einem ersten Ring der Drehlagereinheit angebracht wird, wobei die Drehlagereinheit mit einem relativdrehbaren zweiten Ring drehfest am Außenumfang des Ringvorsprungs der Außenlasche befestigt ist. Letzteres kann ohne Verwendung einer Schraubverbindung, insbesondere durch Presspassung oder dgl. erfolgen.

In einer vorteilhaften Weiterbildung weist die Energieführungskette eine gleichbleibende Teilung für alle Kettenglieder auf, wobei vorgesehen ist, dass die Lage der Schwenkachse des Paars aus Außenlaschen in Längsrichtung dieser Teilung entspricht und dass Schwenkachse des Paars aus Außenlaschen ferner bezüglich der Laschenhöhe gegenüber der Laschen-Mittelebene in Richtung auf das jeweils gegenüberliegende Trum höhenversetzt ist. Mit anderen Worten, im Vergleich zu den Schwenkachsen der Verbindung mit den angrenzenden Innenlaschen, haben die beiden Außenlaschen des Paars mit Laufrolle einen Versatz in Richtung Laschenhöhe um einen ausreichenden Überstand der Laufrolle zu ermöglichen, deren Drehachse koaxial zu der höhenversetzten Schwenkachse liegt.

Zu Steigerung der Seitenstabilität quer zur Längsrichtung der Energieführungskette sieht eine Weiterbildung vor, dass die benachbarten Außenlaschen des Paars mit Laufrolle in einem doppelten "Hintergriff" miteinander stehen. Hierzu ist vorzugsweise vorgesehen, dass eine der benachbarten Außenlaschen des Paars eine sich parallel zur Schwenkebene erstreckende erste Führungsnut aufweist, dass die andere Außenlasche des Paars mit einem sich parallel zur Schwenkebene erstreckendem ersten Führungsteil in die Führungsnut eingreift, insbesondere über den gesamten Schwenkwinkel, dass die andere Außenlasche des Paars eine sich parallel zur Schwenkebene erstreckende zweite Führungsnut aufweist und dass die eine Außenlasche des Paars mit einem sich parallel zur Schwenkebene erstreckendem zweiten Führungsteil in die zweite Führungsnut eingreift, insbesondere über den gesamten Schwenkwinkel. Durch den Eingriff der beiden Führungsteile in beide Führungsnuten lässt sich im Vergleich zu EP 2 839 183 B1 eine verbesserte Seitenstabilität in der Baugruppe mit Laufrollen erzielen.

Zur Vereinfachung des Zusammenbaus bzw. Steigerung der Eingriffswirkung umfasst vorzugsweise eine der benachbarten Außenlaschen des Paars ein separat anzubringendes Abdeckteil, welches eine Seitenbegrenzung der ersten Führungsnut bildet.

Schließlich betrifft die Erfindung auch eine Rollenbaugruppe für eine Energieführungskette gemäß Anspruch 6. Diese umfasst jeweils zwei gegenüberliegende durch Querstege parallel gehaltene Paare aus einer ersten und einer zweiten Außenlasche, die gegeneinander schwenkbar sind und eine Laufrolle koaxial zur Schwenkachse aufweisen. Die Rollenbaugruppe zeichnet sich dadurch aus, dass sie aus lediglich zwei unterschiedlich gestalteten Laschenteilen, die in beiden gegenüberliegenden Laschensträngen verwendbar sind aufgebaut werden kann. Dem entsprechend sind die beiden ersten Außenlaschen und die beiden zweiten Außenlaschen jeweils identisch hergestellt. Damit sind nicht mehr insgesamt vier Laschenteile zur Realisierung einer Baugruppe mit Laufrollen erforderlich.

Die Paare aus komplementären Außenlaschen gemäß der Erfindung sind so gestaltet, dass sie mit bestehenden, im Handel erhältlichen Gestaltungen von Energieführungsketten mit abwechselnden Innen- und Außenlaschen kompatibel sind. Mit anderen Worten, die von der Drehachse der Laufrolle abgewandten Überlappungsbereiche der Außenlaschen sind mit an sich bekannten Innenlaschen kompatibel, wie bereits in EP 2 839 183 B1 beschrieben.

Jede Rollenbaugruppe weist vorzugsweise genau zwei Laufrollen mit koaxialen bzw. fluchtenden Drehachsen auf, d.h. je eine Laufrolle pro Laschenstrangseite in jeder Rollenbaugruppe. Die längenbezogene Anzahl an Laufrollen kann der entsprechenden Anwendung wahlweise angepasst werden, da die Rollenbaugruppen modular einsetzbar und mit bestehenden Energieführungsketten kompatibel sind.

Merkmale des zweiten Aspekts sind mit denen des ersten Aspekts vorteilhaft kombinierbar.

Weitere Einzelheiten, Merkmale und Vorteile der Erfindung ergeben sich aus der nachfolgenden, ausführlichen Beschreibung eines bevorzugten Ausführungsbeispiels anhand der beiliegenden Abbildungen. Diese zeigen:
FIG.1: eine schematische Seitenansicht einer abrollenden Energieführungskette mit Laufrollen;
FIG.2: eine Laufrolle gemäß einem ersten nicht beanspruchten Aspekt und ersten Variante in Seitenansicht (FIG.2A), einen Querschnitt gemäß Schnittlinien A-A (FIG.2B), eine Vergrößerung des Querschnitts (FIG.2C) sowie einen Längsschnitt (FIG.2D);
FIG.3: eine Laufrolle gemäß einer zweiten Variante in Seitenansicht;
FIG.4: eine Laufrolle gemäß einer dritten Variante in teilweiser Seitenansicht (FIG.4A) und in vergrößertem Querschnitt (FIG.4B);
FIG.5: eine Laufrolle gemäß einer vierten Variante in Seitenansicht;
FIG.6: eine Laufrolle gemäß einer fünften Variante in Seitenansicht;
FIG.7: zusammenwirkende Rollprofile gemäß einer weiteren Variante im Querschnitt;
FIG.8: ein Rollprofil gemäß einer weiteren Variante im Querschnitt;
FIG.9: ein Rollprofil gemäß einer weiteren Variante in Stirnansicht (FIG.9A), in Vergrößerung der Stirnansicht (FIG.9B) und im teilweiser Seitenansicht (FIG.9C); und
FIG.10A-B: perspektivischer Ansichten von zwei erfindungsgemäßen Außenlaschen, von der Außenseite (FIG.10A) und Innenseite gesehen (FIG.10B) .

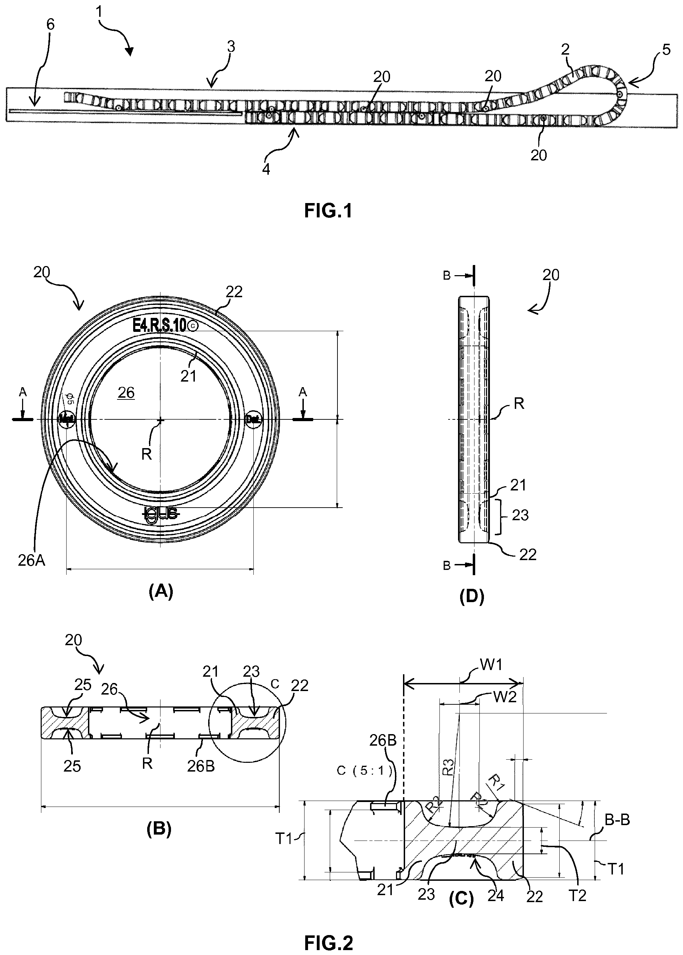

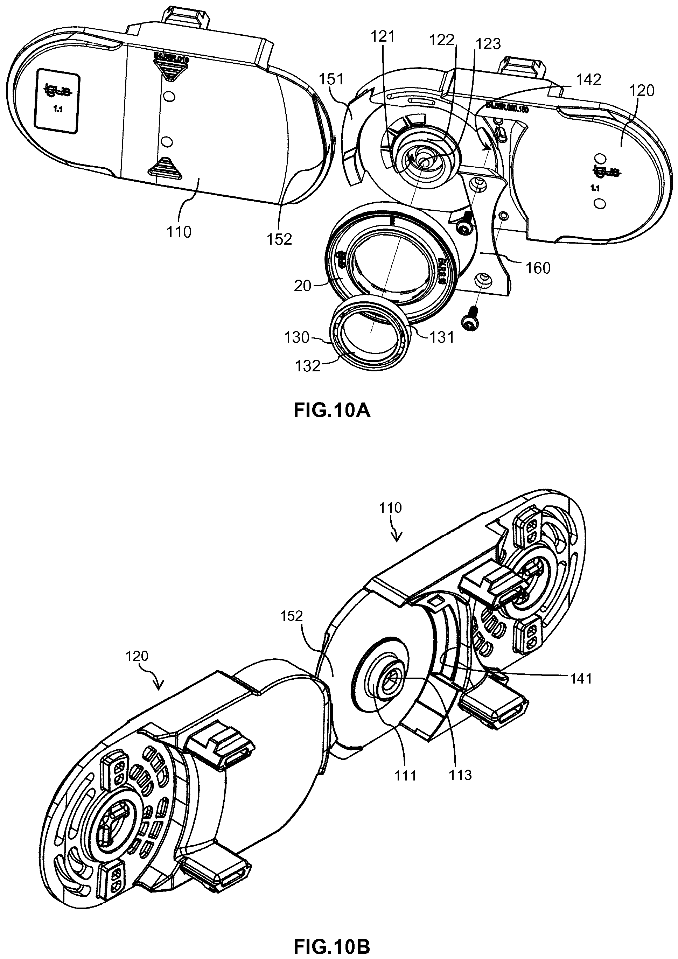

FIG.1 zeigt eine Energieführungskette 1 zur Führung von Leitungen, wie Schläuchen, Kabeln oder dergleichen (nicht gezeigt), mit einer Anzahl gelenkig miteinander verbundener Kettenglieder 2, die jeweils zueinander parallele Seitenlaschen (vgl. FIG.10A-10B) und diese verbindende Querstege (nicht gezeigt) an sich bekannter Bauart umfassen. Die Energieführungskette ist hin- und zurück verfahrbar und bildet dabei variabel, ein Obertrum 3, ein Untertrum 4 und einen diese verbindenden Umlenkbereich 5 bildet. Im Beispiel aus FIG.1 sind in regelmäßigen Abständen an ausgewählten Kettengliedern 2 des Obertrums 3 und des Untertrums 4 Laufrollen 20 vorgesehen. Die Laufrollen 20 sind derart angeordnet, dass sie über Schmalseiten der Seitenlaschen in Richtung auf das jeweils gegenüberliegende Trum 3 bzw. 4 hervorstehen. Somit ermöglichen die Laufrollen 20 beim Verfahren der Energieführungskette 1 ein Abrollen des Obertrums 3 einerseits auf dem Untertrum 4 und darüber hinaus auf einer separaten Stützfläche 6, z.B. an einer Führungsrinne. Mit Ausnahme der nachfolgend näher erläuterten Gestaltung der Laufrollen 20 kann die Energieführungskette 1 gemäß dem ersten Aspekt jede an sich bekannter Bauweise haben.

FIG.2 zeigt eine erste Variante einer Laufrolle 20. Die Laufrolle 20 ist materialeinheitlich und einteilig aus Kunststoff hergestellt, z.B. im Spritzgussverfahren.

Nebst einer hier nicht gezeigten Lagereinheit, wie einem Wälzlager (vgl. FIG.10A-10B) hat die Laufrolle 20 einen Radkörper aus Kunststoff mit einer Nabe 21, einem Radkranz 22, sowie mit einem Nabe und Radkranz verbindenden Radialbereich 23, wobei Nabe 21, Radkranz 22 und Radialbereich 23 aus einem Stück hergestellt sind. Wie am besten aus FIG.2C ersichtlich ist die Materialstärke, hier insbesondere die axiale Wandstärke, des Radialbereichs 23 im Vergleich zur axialen Abmessung T1 des Radkranz 22 und der Nabe 21 spürbar reduziert. So kann der Radkörper der Laufrolle 20 radiale Stöße durch elastische Verformbarkeit des Radialbereichs 23 dämpfen, d.h. die Laufrolle 20 selbst hat inhärente Stoßdämpfungs-Wirkung. Hierzu ist beidseitig zur Medianebene B-B symmetrisch eine axial eine Verjüngung 24 vorgesehen, welche die wesentliche Reduzierung der Materialstärke bewirkt. Die Verengungen bzw. Verjüngungen der Wandstärke des Radialbereichs 23 werden durch einen Radius R3 gebildet, für den gilt R3 » T1 und R3 » W1, mit W1 als radiale Gesamtabmessung des Radkörpers von der Innenfläche der Nabe 21 bis zur Außenfläche des Radkranz 22. Entgegengesetzte Stirnflächen 25 des Radialbereichs sind somit entsprechend dem Krümmungsradius R3 konkav gekrümmt. Im radial mittleren Bereich weist der Radialbereich 23 eine minimale Wandstärke T2<<T1 auf, mit z.B. T2 = 25-35% von T1. Auch die mittlere Axialstärke des Radialbereichs 23 ist somit deutlich gegenüber den äußeren Axialabmessungen reduziert. Wie FIG.2C weiter veranschaulicht nimmt die axiale Wandstärke vom Bereich mit dem Minimum T2 radial nach innen bzw. nach außen hin stetig zu. Weiterhin ist ein entsprechend dem deutlich kleineren Übergangsradius R2 stetig gekrümmter Übergang von jeder Stirnfläche 25 des Radialbereichs 23 zur Innenfläche des Radkranzes 22 und zur Außenfläche der Nabe 21 vorgesehen ist, mit R2<<R3. Schließlich erfolgt eine umgekehrte Abrundung gemäß dem zu R2 ähnlich dimensionierten Radius R1 hin zu den gegenüberliegen Stirnflächen der Nabe 21 bzw. des Radkranz 23. Die resultierende Vermeidung von scharfkantigen Übergängen zwischen Radialbereich 23 und Nabe 21 bzw. Radkranz 23 ist hinsichtlich der Verformbarkeit des Radialbereichs 23 vorteilhaft. Ferner ist es vorteilhaft, wenn sich der Radialbereich 23 mit reduzierter Wandstärke zumindest über einen Radialabschnitt W2 von mindestens 25% der Radialabmessung W1 erstreckt.

Im Falle der wegen Dauerbeständigkeit vorteilhaften Variante nach FIG.2 ist die Laufrolle 20 mit einem axial verengten Radialbereich 23 versehen, der als in Umfangsrichtung unterbrechungsfrei durchgehende, zur Drehachse R rotationssymmetrische Ringscheibe ausgeführt ist, wie die Seitenansicht in FIG.2A veranschaulicht.

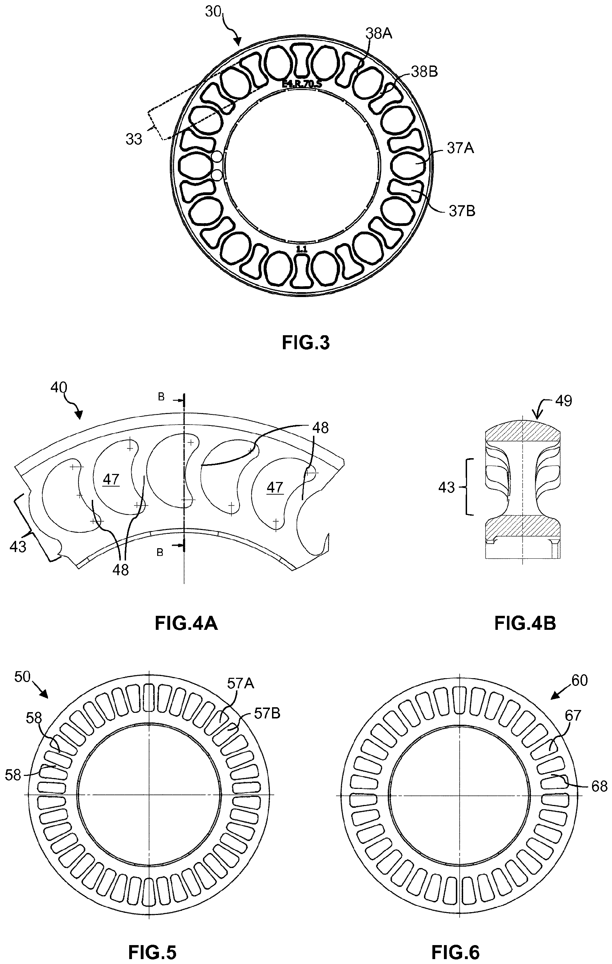

Die Bauweise gemäß FIG.2 ist jedoch mit axialen Durchbrüchen gemäß FIG.3-6 kombinierbar, wenn eine gesteigerte Verformbarkeit bzw. Dämpfungswirkung gewünscht ist. Die Bauweise von Nabe und Radkranz in FIG.3-6 kann derjenigen nach FIG.2 entsprechen und wird nicht wiederholt.

FIG.3 zeigt eine Variante einer Laufrolle 30 mit einer Vielzahl axialer Durchbrechungen 37A, 37B im Radialbereich 33. Die in Umfangsrichtung alternierenden Durchbrechungen 37A, 37B haben jeweils unterschiedliche Grundformen, eine im Wesentlichen abgeflachte ovale, konvexe Grundform für die Durchbrechungen 37A und eine grob T-förmig gerundete konkave Grundform für die Durchbrechungen 37B. Die konjugiert Grundformen der Durchbrechungen 37A, 37B sind so gewählt, dass sie im Radialbereich 33 bogenartig gekrümmte Radialstege 38A, 38B bilden, die bezüglich eines Symmetrieradius der Durchbrechungen 37A, 37B symmetrisch jedoch entgegengesetzt gekrümmt verlaufen. Die Radialstege 38A, 38B wirken dabei wie vor gekrümmte Radspeichen, die bei radialen Kräften an der Außenseite des Radkranzes elastisch verformen und damit die Dämpfung verbessern.

FIG.4 zeigt eine Variante einer Laufrolle 30 ebenfalls mit einer Vielzahl über den Umfang gleich verteilter axialer Durchbrechungen 47 im Radialbereich 43, hier z.B. eine Anzahl von ca. 25-30 Durchbrechungen 47. Die Durchbrechungen haben hier in der Medianebene bzw. in Seitenansicht eine sichelförmige Grundform und bilden somit jeweils gleichsinnig gekrümmte Radialstege 48 mit einer Wirkung ähnlich wie zu FIG.3. Die Formgebung der Durchbrechungen 47 ist so gewählt, dass die Radialstege 48 eine im Wesentlichen gleichbleibende Stärke in Umfangsrichtung aufweisen und endseitig stetig in den Radkranz bzw. die Nabe übergehen. FIG.4B veranschaulicht die Kombination der Durchbrechungen 47 mit der Verjüngung des Radialbereichs nach dem Prinzip aus FIG.2. ferner zeigt FIG.4B eine nach außen konvex gekrümmte Rollfläche am Radkranz.

Die Varianten der Laufrollen 50 bzw. 60 nach FIG.5-6 unterscheiden sich ebenfalls lediglich durch die Formgebung der jeweiligen axialen Durchbrechungen. In FIG. 5 sind in Umfangsrichtung alternierend nach außen bzw. nach innen zulaufende trapezförmige Durchbrechungen 57A, 57B mit gleichschenkligen bzw. zum Radius symmetrischen Trapezen als Grundform vorgesehen. Hierdurch verbleiben Radialstege 58 die leicht schräg zum Radius stehen und somit paarweise betrachtet nach außen zu- bzw. auseinanderlaufen. In FIG.6 haben die Durchbrechungen 67 jeweils eine identische, nach innen zulaufende Trapezform, so dass die dadurch verbleibenden Radialstege 68 technisch radial verlaufen. Die Radialbereiche der Laufrollen 50 bzw. 60 und deren Nabe bzw. Radkranz kann ansonsten ebenfalls gemäß dem Prinzip aus FIG.2 gestattet sein.

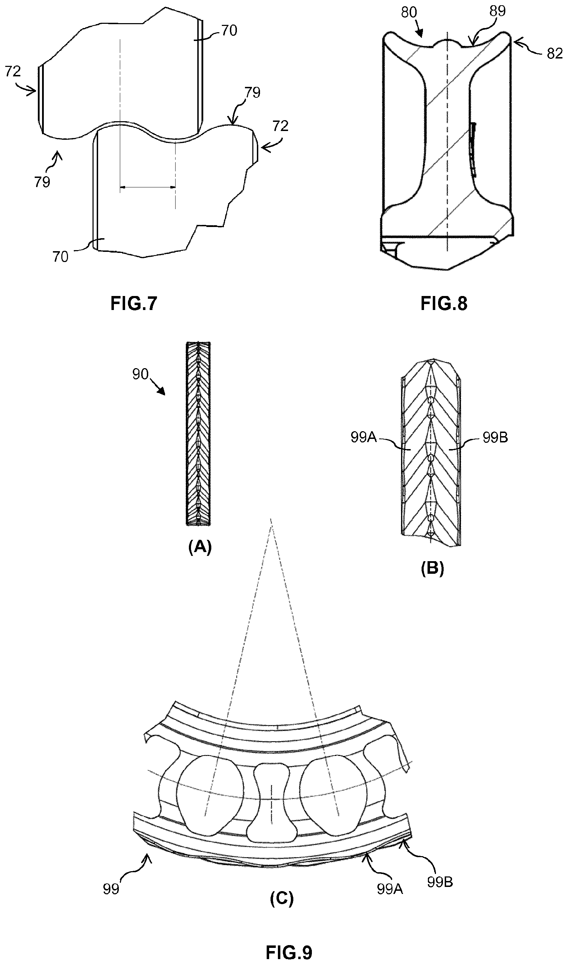

FIG.7-9 veranschaulichen unterschiedliche Profile der abrollenden Laufflächen (Rollprofil) im Querschnitt durch den Radkranz 72, 82 bzw. 92, wobei die sonstige Gestaltung des Radkörpers einem der vorstehenden Varianten entsprechen kann.

In FIG.7 hat das Rollprofil 79 mittig zur Medianebene eine konkave Einbuchtung und an den Außenseiten, zur Medianebene symmetrisch, zwei konvexe Ausbauchungen, die zur konkaven Einbuchtung konjugiert bzw. passend geformt sind. Somit kann durch seitlichen Versatz von 2 aufeinander treffenden Laufrollen 70, wie in FIG.7 veranschaulicht, der Anstieg des Abstands zwischen den Trumen vermindert oder ganz vermieden werden. Das Rollprofil 79 kann dabei selbsttätig einen entsprechenden seitlichen Versatz bewirken.

FIG.8 zeigt ein Rollprofil 89 dessen Wirkprinzip ähnlich ist, wobei jedoch eine bessere Dämpfungswirkung durch die beiden stärker ausgeprägten konvexen Ausbauchungen an den Stirnseiten erzielt werden kann.

FIG.9A-9C zeigen ein weiteres Rollprofil 99. Dieses Rollprofil 99 ist in Umfangsrichtung gewellt mit alternierenden Wellenbergen 99A und Wellentälern 99B. Hierbei sind die Wellenberge 99A und Wellentäler 99B mit Ihren Flanken in einem Winkel schräg zur Meridianebene gerichtet, wie FIG.9A-B veranschaulichen. Zudem besteht das Rollprofil 99 aus zwei in Bezug auf die Umfangrichtung jeweils rotationssymmetrische Profilhälften, die jedoch asymmetrisch gegenüber der Meridianebene versetzt um eine halbe Wellenlänge, sodass in Axialrichtung einem Wellenberg 99A bzw. einem Wellental 99B der einen Profilhälfte ein Wellental bzw.

Wellenberg der anderen Profilhälfte gegenüberliegt (FIG.9C). Durch dieses Rollprofil wird eine zusätzliche Dämpfungswirkung erzielt.

Zurückkehrend zu FIG.2 bildet die Nabe 21 der Laufrolle 20 eine im wesentlichen zylindrische Aufnahme 26 um die Drehachse R, mit welcher die Nabe 21 drehfest an einer Drehlagereinheit (FIG.10A) befestigt wird. Hierzu hat die Nabe 21 an einer Innenfläche ein Befestigungsprofil 26A aufweist, insbesondere mit Vorsprüngen 26B und/oder Aussparungen, für eine kraft- und formschlüssige Verbindung mit einer Außenfläche der Drehlagereinheit.

Fig.10A-10B veranschaulichen einen Ausführungsbeispiel der Erfindung, bei welchem optional eine Laufrolle 20 gemäß dem ersten, nicht beanspruchten Aspekt zum Einsatz kommen kann.

In FIG.10A-10B ist ein Paar aus zusammenwirkenden, benachbarten Außenlaschen 110, 120 gezeigt, die miteinander schwenkbar verbunden sind. An der ersten Außenlasche 110 ist einteilig mit dieser ein seitlich vorstehender im Wesentlichen zylindrischer Gelenkzapfen 111 angeformt. Dieser wirkt zur Bildung eines Schwenkgelenks mit einer entsprechenden Gelenkaufnahme 121 an der zweiten Außenlasche 120 zusammen zur Bildung der schwenkbare Gelenkverbindung zwischen den beiden Seitenlaschen 110, 120. Diese Gelenkaufnahme 121 der zweiten Außenlasche 120 wird durch einen hülsenartigen zur Schwenkachse koaxialen Ringvorsprung 122 gebildet, der einteilig mit der zweiten Außenlasche 120 hergestellt ist. Im hier nicht gezeigten zusammengesetzten Zustand ist somit der Gelenkzapfen 111 in der Gelenkaufnahme 121 drehbar gelagert, damit die Außenlaschen 110, 120 zueinander schwenkbar sind. Zur weitergehenden Verstärkung der schwenkbaren Gelenkverbindung weist die zweite Außenlasche 120 einen koaxialen Zentrierzapfen 123 auf, der schwenkbare in eine zylindrische Öffnung 113 im Gelenkzapfen 111 eingreift.

Die Laufrolle 20 ist mittels einer Lagereinheit 130, hier einem Kugellager, mit einem ersten und einem zweiten Lagerring 131, 132 am Ringvorsprung 122 der zweiten Außenlasche 120 drehbar befestigt. Dazu ist die Nabe drehfest, z.B. kraft- und/oder formschlüssig, auf dem ersten Ring 131 befestigt und der zweite Ring 131 drehfest auf dem Ringvorsprung 122 befestigt, z.B. durch eine Presspassung oder dgl.

Die erste Außenlasche 110 hat eine sich parallel zur Schwenkebene erstreckende erste Führungsnut 141 in welche die zweite Außenlasche 120 des Paars mit einem sich parallel zur Schwenkebene erstreckendem ersten Führungsteil 151 eingreift, insbesondere über den gesamten Schwenkwinkel. Die zweite Außenlasche 120 bildet anhand eines ein separat anzubringenden, z.B. durch Schraubverbindung, Abdeckteils 160 eine sich parallel zur Schwenkebene erstreckende zweite Führungsnut 142. Die erste Außenlasche 110 hat ein parallel zur Schwenkebene erstreckendes weiteres, zweites Führungsteil 152, das in die zweite Führungsnut eingreift, insbesondere über den gesamten Schwenkwinkel, um die Seitenstabilität zu erhöhen.

Die Drehachse R der Laufrolle 20 bzw. Lagereinheit 130 ist dabei bezüglich beider Seitenlaschen 110; 120 ortsfest, nämlich hier koaxial zur Schwenkachse, die durch Gelenkzapfen 111 bzw. Gelenkaufnahme 121 usw. vorgegeben ist.

### Bezugszeichenliste

**FIG.1-2**
   1 Energieführungskette
   2 Kettenglied
   3, 4 Obertrum bzw. Untertrum
   5 Umlenkbereich
   20 Laufrollen
   21 Nabe
   22 Radkranz
   23 Radialbereich
   24 Verjüngung bzw. Verengung
   25 Stirnfläche
   26 Aufnahme (für Drehlagereinheit)
   26A Befestigungsprofil
   26B Vorsprünge/Aussparungen
   29 Lauffläche
   R Drehachse
   R1, R2, R3 Radien
   T1, T2 axiale Wandstärke
**FIG.3-6**
   30, 40, 50, 60 Laufrollen
   33, 43 Radialbereich
   49 Lauffläche
   37A, 37B; 47; 57A, 57B; 67 axiale Durchbrechungen
   38A, 38B; 48; 58; 68 Radialstege
**FIG.7-9**
   72; 82; 92 Radkranz
   79; 89; 99 Lauffläche bzw. Rollprofil
   99A, 99B Wellenberg bzw. Wellental
**FIG.10A-10B**
   110; 120 Außenlaschen
   111 Gelenkzapfen
   113 (Zentrier-)Öffnung
   121 Gelenkaufnahme
   122 Ringvorsprung
   123 Zentrierzapfen
   130 Lagereinheit (m. Kugellager)
   131, 132 Lagerringe
   141 erste Führungsnut
   142 zweite Führungsnut
   151 erstes Führungsteil
   152 zweites Führungsteil
   160 Abdeckteil (als Quersicherung)

## Patentansprüche

1. Energieführungskette zur Führung von Leitungen, wie Schläuchen, Kabeln oder dergleichen, mit zwei Laschensträngen umfassend abwechselnde Innenlaschen und Außenlaschen, die durch Gelenkverbindungen schwenkbar miteinander verbunden sind, wobei zumindest einige der Außenlaschen diese jeweils zueinander parallel haltende Querstege aufweisen, und die Energieführungskette so verfahrbar ist, dass diese ein Obertrum, ein Untertrum und einen diese verbindenden Umlenkbereich bildet, wobei zumindest das Obertrum und/oder das Untertrum eine Anzahl Laufrollen aufweist, die derart angeordnet sind, dass sie zumindest geringfügig über in Richtung auf das jeweils gegenüberliegende Trum hervorstehen, um beim Verfahren der Energieführungskette ein Abrollen zu ermöglichen, **dadurch gekennzeichnet, dass**
jede Laufrolle jeweils an einem Paar aus zwei gegeneinander schwenkbaren Außenlaschen (110; 120), mit einer ersten Außenlasche (110) und einer benachbarten zweiten Außenlasche (120), angeordnet ist, und dass die Gelenkverbindung des Paars aus Außenlaschen einen Gelenkzapfen (111), der einteilig mit der ersten Außenlasche (110) geformt ist, sowie eine entsprechende Gelenkaufnahme (121) umfasst, die von der zweiten Außenlasche (120) gebildet ist, wobei der Gelenkzapfen (111) in die Gelenkaufnahme (121) eingreift und darin schwenkbar ist, wobei die zweite Außenlasche (120) einen hülsenartigen zur Schwenkachse koaxialen Ringvorsprung (122) aufweist, welcher die Gelenkaufnahme (121) bildet, und an welchem die Laufrolle (20) mit ihrer Drehachse koaxial zur Schwenkachse drehbar gelagert ist, wobei die erste und die zweite Außenlasche des Paars aus zwei gegeneinander schwenkbaren Außenlaschen (110; 120) jeweils einen von der Drehachse der Laufrolle (20) abgewandten Überlappungsbereich zur Verbindung mit einer Innenlasche aufweisen.

2. Energieführungskette nach Anspruch 1, **dadurch gekennzeichnet, dass** die Laufrolle (20) drehfest an einem ersten Ring (131) einer Drehlagereinheit (130) angebracht ist, die mit einem relativdrehbaren zweiten Ring (132) drehfest am Außenumfang des Ringvorsprungs (122) der Außenlasche (120) befestigt ist, insbesondere durch Presspassung.

3. Energieführungskette nach Anspruch 1 oder 2, **dadurch gekennzeichnet, dass** die Energieführungskette eine gleichbleibende Teilung aufweist und die Lage der Schwenkachse des Paars aus Außenlaschen (110, 120) in Längsrichtung der Teilung entspricht und bezüglich der Laschenhöhe gegenüber der Mittelebene in Richtung auf das jeweils gegenüberliegende Trum höhenversetzt ist.

4. Energieführungskette nach einem der Ansprüche 1 bis 3, **dadurch gekennzeichnet, dass** eine der benachbarten Außenlaschen des Paars (110) eine sich parallel zur Schwenkebene erstreckende erste Führungsnut (141) aufweist, dass die andere Außenlasche des Paars (120) mit einem sich parallel zur Schwenkebene erstreckendem ersten Führungsteil (151) in die Führungsnut (141) eingreift, insbesondere über den gesamten Schwenkwinkel, dass die andere Außenlasche des Paars (120) eine sich parallel zur Schwenkebene erstreckende zweite Führungsnut (142) aufweist und dass die eine Außenlasche des Paars (110) mit einem sich parallel zur Schwenkebene erstreckendem zweiten Führungsteil (152) in die zweite Führungsnut (142) eingreift, insbesondere über den gesamten Schwenkwinkel.

5. Energieführungskette nach einem der Ansprüche 1 bis 4, **dadurch gekennzeichnet, dass** die eine der benachbarten Außenlaschen des Paars (120) ein separat anzubringendes Abdeckteil (160) umfasst, welches eine Seitenbegrenzung einer Führungsnut (142) bildet.

6. Rollenbaugruppe für eine Energieführungskette nach einem der Ansprüche 1 bis 5, umfassend jeweils zwei gegenüberliegende durch Querstege parallel gehaltene Paare aus einer ersten und einer zweiten Außenlasche (110, 120), die gegeneinander schwenkbar sind und eine Laufrolle (20) koaxial zur Schwenkachse aufweisen, **dadurch gekennzeichnet, dass** die beiden ersten Außenlaschen (110) und die beiden zweiten Außenlaschen (120) jeweils identisch hergestellt sind, wobei die zweiten Außenlaschen (120) jeweils einen hülsenartigen zur Schwenkachse koaxialen Ringvorsprung (122) aufweisen, welcher die Gelenkaufnahme (121) bildet, und an welchem die Laufrolle (20) drehbar gelagert ist.

7. Vorrichtung nach einem der Ansprüche 1 bis 6, **dadurch gekennzeichnet, dass** die erste Außenlasche (110) und die zweite Außenlasche (120) eines Paars komplementär zueinander und unterschiedlich gestaltet sind.

## Claims

1. Energy chain for the guiding of lines, such as hoses, cables or similar, with two link plate strands comprising alternating inner link plates and outer link plates, which are connected swivellably to each other by flexible connections, wherein at least some of the outer link plates have cross webs holding the outer link plates respectively parallel to one another, and the energy chain is displaceable such that it forms an upper strand, a lower strand and a deflection area connecting these, wherein at least the upper strand and/or the lower strand comprises a number of rollers, which are arranged such that they project at least slightly beyond in the direction of the respectively opposite strand, in order to facilitate a rolling action when the energy chain is displaced, **characterized in that**
each roller is arranged respectively on a pair of two outer link plates (110; 120) swivellable in relation to one another with a first outer link plate (110) and an adjacent second outer link plate (120), and that the flexible connection of the pair of outer link plates comprises a joint pin (111), which is formed in one piece with the first outer link plate (110), and a corresponding joint mount (121), which is formed by the second outer link plate (120), wherein the joint pin (111) engages in the joint mount (121) and is swivellable therein, wherein the second outer link plate (120) has a sleeve-like annular projection (122) coaxial with the swivel axis, which projection forms the joint mount (121), and on which the roller (20) is supported rotatably with its rotary axis coaxial with the swivel axis, wherein the first and the second outer link plate (110; 120) of the pair of two outer link plates (110; 120) swivellable in relation to one another each have an overlapping area, facing away from the rotary axis of the roller (20), for connection with an inner link plate.

2. Energy chain according to claim 1, **characterized in that** the roller (20) is mounted in a torque-proof manner on a first ring (131) of a pivot bearing unit (130), which is attached by a relatively rotatable second ring (132) in a torque-proof manner on the outer circumference of the annular projection (122) of the outer link plate (120), in particular by press fitting.

3. Energy chain according to claim 1 or 2, **characterized in that** the energy chain has a uniform spacing and the position of the swivel axis of the pair of outer link plates (110, 120) corresponds in the longitudinal direction to the spacing and is offset in height with reference to the link plate height with respect to the central plane in the direction of the respectively opposite strand.

4. Energy chain according to any one of claims 1 to 3, **characterized in that** one of the adjacent outer link plates of the pair (110) has a first guide groove (141) extending parallel to the swivel axis, that the other outer link plate of the pair (120) engages in the guide groove (141) with a first guide part (151) extending parallel to the swivel axis, in particular over the entire swivel angle, that the other outer link plate of the pair (120) has a second guide groove (142) extending parallel to the swivel plane and the one outer link plate of the pair (110) engages in the second guide groove (142) with a second guide part (152) extending parallel to the swivel plane, in particular over the entire swivel angle.

5. Energy chain according to one of claims 1 to 4, **characterized in that** one of the adjacent outer link plates of the pair (120) comprises a cover part (160) which is to be applied separately and which forms a lateral delimitation of a guide groove (142).

6. Roller assembly for an energy chain according to any one of claims 1 to 5, comprising respectively two opposite pairs, held parallel by cross webs, of a first and a second outer link plate (110, 120), which are swivellable in relation to one another and comprise a roller (20) coaxial with the swivel axis, **characterized in that** the two first outer link plates (110) and the two second outer link plates (120) are each manufactured identically, wherein the second outer link plates (120) each have a sleeve-like annular protrusion (122) coaxial with the swivel axis, which protrusion forms a joint mount (121), and on which the roller (20) is rotatably supported.

7. Device according to any one of claims 1 to 6, **characterized in** the first outer link plate (110) and the second outer link plate (120) of one pair are configured complementary to each other and differently.

## Revendications

1. Chaîne porte-câbles pour le guidage de conduites telles que des tuyaux, des câbles ou analogues, avec deux cordons de pattes constitués en alternance de pattes intérieures et de pattes extérieures, qui sont reliés entre eux de manière pivotante par des liaisons articulées, au moins certaines des pattes extérieures présentant des traverses qui les maintiennent respectivement parallèles entre eux, et la chaîne porte-câbles étant mobile de telle sorte qu'elle forme un brin supérieur, un brin inférieur et une zone de renvoi reliant ceux-ci, au moins le brin supérieur et/ou le brin inférieur présentant un certain nombre de rouleaux qui sont disposés de telle sorte qu'ils font saillie au moins légèrement vers le brin opposé respectif, afin de permettre un déroulement lors du déplacement de la chaîne porte-câbles, **caractérisée en ce que** chaque rouleau est disposé sur une paire de deux pattes extérieures (110; 120) pouvant pivoter l'une contre l'autre, avec une première patte extérieure (110) et une seconde patte extérieure adjacente (120), et **en ce que** l'articulation de la paire de pattes extérieures comprend un axe d'articulation (111) formé d'un seul tenant avec la première patte extérieure (110) et un logement d'articulation correspondant (121) formé par la seconde patte extérieure (120), l'axe d'articulation (111) s'engageant dans le logement d'articulation (121) et pouvant pivoter dans celui-ci, la seconde patte extérieure (120) présentant une saillie annulaire (122) en forme de manchon qui est coaxiale à l'axe de pivotement et qui forme le logement d'articulation (121) et sur lequel le rouleau (20) est monté de manière rotative avec son axe de rotation coaxial à l'axe de pivotement, la seconde patte extérieure de la paire de deux pattes extérieures (110; 120) pivotables l'une contre l'autre présentant chacune une zone de chevauchement orientée à l'opposé de l'axe de rotation du rouleau (20) pour la connexion à une patte intérieure.

2. Chaîne porte-câbles selon la revendication 1, **caractérisée en ce que** le rouleau (20) est monté de manière fixe en rotation à une première bague (131) d'une unité de palier rotatif (130) qui est montée de manière fixe en rotation à la circonférence extérieure de la saillie annulaire (122) de la patte extérieure (120) au moyen d'une seconde bague (132) relativement rotative, en particulier par ajustement serré.

3. Chaîne porte-câbles selon la revendication 1 ou 2, **caractérisée en ce que** la chaîne porte-câbles présente un pas constant, et la position de l'axe de pivotement de la paire de pattes extérieures (110, 120) dans la direction longitudinale correspond au pas et est décalée verticalement par rapport à la hauteur de la patte par rapport au plan central vers le brin opposé respectif.

4. Chaîne porte-câbles selon l'une des revendications 1 à 3, **caractérisée en ce que** l'une des pattes extérieures voisines de la paire (110) présente une première rainure de guidage (141) s'étendant parallèlement au plan de pivotement, **en ce que** l'autre patte extérieure de la paire (120) s'engage dans la rainure de guidage (141) avec une première partie de guidage (151) s'étendant parallèlement à l'axe de pivotement, en particulier sur tout l'angle de pivotement, **en ce que** l'autre patte extérieure de la paire (120) présente une deuxième rainure de guidage (142) s'étendant parallèlement au plan de pivotement, et **en ce que** la première patte extérieure de la paire (110) s'engage dans la deuxième rainure de guidage (142) avec une deuxième partie de guidage (152) s'étendant parallèlement au plan de pivotement, en particulier sur tout l'angle de pivotement.

5. Chaîne porte-câbles selon l'une quelconque des revendications 1 à 4, **caractérisée en ce que** l'une des pattes extérieures adjacentes de la paire (120) comprend un élément de couverture (160) destiné à être fixé séparément et formant une délimitation latérale d'une rainure de guidage (142).

6. Ensemble de rouleau pour une chaîne porte-câbles selon l'une quelconque des revendications 1 à 5, comprenant chacun deux paires opposées d'une première et d'une seconde patte extérieure (110, 120) maintenues parallèles par des traverses et pouvant pivoter l'une contre l'autre et présentant un rouleau (20) coaxial à l'axe de pivotement, **caractérisé en ce que** les deux premières pattes extérieures (110) et les deux secondes pattes extérieures (120) sont chacune fabriquées de manière identique, les secondes pattes extérieures (120) présentant chacune une saillie annulaire (122) en forme de manchon coaxiale à l'axe de pivotement qui forme le logement d'articulation (121) et sur laquelle le rouleau (20) est monté de manière rotative.

7. Dispositif selon l'une quelconque des revendications 1 à 6, **caractérisé en ce que** la première patte extérieure (110) et la seconde patte extérieure (120) d'une paire sont complémentaires l'une à l'autre et ont une forme différente.
